# EUROPÄISCHE PATENTSCHRIFT

(11) **EP 2 102 977 B1**
(45) Veröffentlichungstag und Bekanntmachung des Hinweises auf die Patenterteilung: **02.08.2017**
(21) Anmeldenummer: 07820438.5
(22) Anmeldetag: 21.09.2007
(51) Int. Cl.: H02M 3/335

(54) **SCHALTUNGSANORDNUNG ZUR REDUZIERTEN SCHALTERBELASTUNG**
CIRCUIT ARRANGEMENT FOR REDUCED SWITCH LOAD
DISPOSITIF DE COMMUTATION POUR LA RÉDUCTION DE LA SOLLICITATION D'UN COMMUTATEUR

(30) Priorität: 19.12.2006 AT 20852006
(43) Veröffentlichungstag der Anmeldung: 23.09.2009
(73) Patentinhaber: Siemens Aktiengesellschaft, 80333 München (DE)
(72) Erfinder: APPEL, Wilhelm, 2136 Laa a. d. Thaya (AT); EICHHORNER, Bernhard, 1210 Wien (AT); PEPRNY, Wolfgang, 1210 Wien (AT); SCHÖNLEITNER, Arnold, 1130 Wien (AT)
(74) Vertreter: Maier, Daniel Oliver
(86) Internationale Anmeldenummer: PCT/EP2007/060009
(87) Internationale Veröffentlichungsnummer: WO 2008/074530

(56) Entgegenhaltungen:
- EP-A- 0 539 903
- DE-A1- 3 133 578

## Beschreibung

Die Erfindung betrifft eine Schaltungsanordnung zur Entlastung von gemäß Anspruch 1.

Schaltungsanordnungen dieser Art sind etwa aus asymmetrischen Halbbrückenschaltungen bekannt, bei denen die zum Zeitpunkt der Sperrphase der Halbleiterschalter in parasitären Induktivitäten, wie etwa Leitungsinduktivitäten oder Streuinduktivitäten, vorhandenen Energie über Dioden in den entsprechenden Spannungszwischenkreis zurückgespeist wird. Dabei muss aber die zulässige Spannungsfestigkeit der Halbleiterschalter jedenfalls größer sein als die Höhe der Zwischenkreisspannung.

Dieses Problem wird in herkömmlicher Weise durch Einsatz von Halbleiterschaltern mit entsprechend hohen, zulässigen Sperrspannungen gelöst. Dadurch entstehen allerdings entsprechend höhere Kosten. Andererseits sind Halbleiterschalter mit entsprechend hohen Sperrspannungen oft auch überhaupt nicht verfügbar, oder weisen andere Nachteile auf, wie etwa schlechte Durchlasseigenschaften, oder große Bauelementgrößen. Daher müssen gemäß Stand der Technik oft auch mehrere Schalter mit hohen zulässigen Sperrspannungen parallel geschaltet werden, um die notwendigen Leiteigenschaften zu erlangen.

Es ist daher die Aufgabe der Erfindung, diese Nachteile zu vermeiden und eine Schaltungsanordnung zu verwirklichen, die auf einfache und somit kostengünstige Art und Weise eine reduzierte Belastung der Halbleiterschalter sicher stellt.

Dieses Ziel wird mit den Merkmalen von Anspruch 1 erreicht.

Anspruch 2 bezieht sich auf ein Schaltnetzteil mit einer Schaltungsanordnung nach Anspruch 1.

Die Erfindung wird im Folgenden anhand einer Ausführungsform mithilfe der beiliegenden Figuren näher erläutert. Es zeigen hierbei die
Fig. 1 eine bekannte Schaltungsanordnung gemäß dem Stand der Technik, und
Fig. 2 eine Darstellung einer erfindungsgemäßen Schaltungsanordnung für ein Schaltnetzteil.

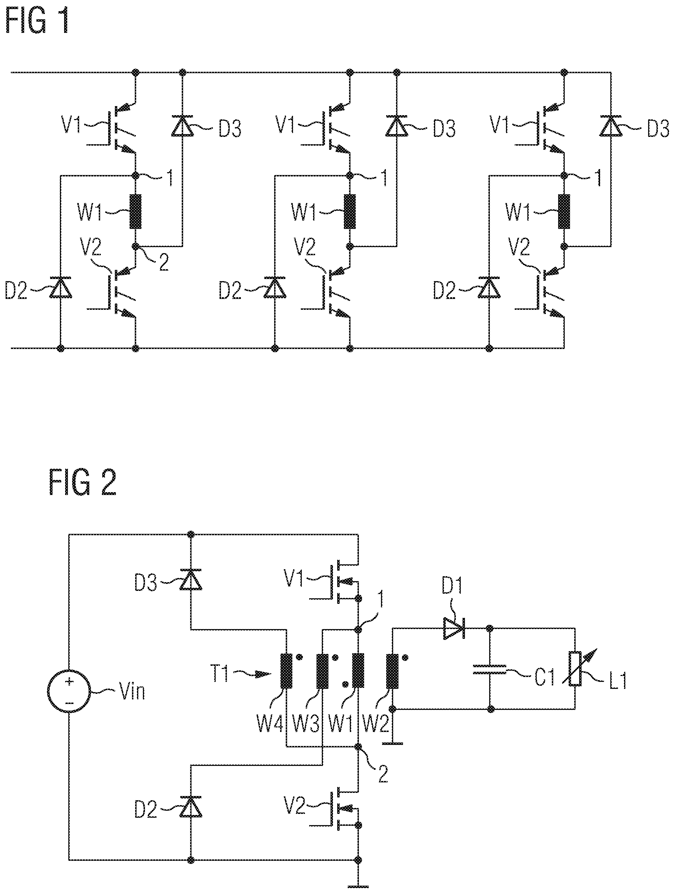

Anhand der Fig. 1 wird zunächst auf eine bekannte Schaltungsanordnung, wie sie etwa aus Übertragerschaltungen mit asymmetrischen Halbbrückenschaltungen bekannt ist, eingegangen. Die Schaltungsanordnung besteht aus einer Parallelschaltung mehrerer Zwischenkreise, die jeweils durch zwei Halbleiterschalter V1 und V2, sowie zwei Dioden D2 und D3 gebildet werden. Der erste Halbleiterschalter V1 ist mit dem zweiten Halbleiterschalter V2 seriell geschaltet, wobei der Drain-Anschluss des ersten Halbleiterschalters V1 mit einer Versorgungsspannung Vᵢₙ (in Fig. 1 nicht eingezeichnet) verbunden ist, und der Source-Anschluss des zweiten Halbleiterschalters V2 auf Masse liegt. Zwischen dem ersten Halbleiterschalter V1 und dem zweiten Halbleiterschalters V2 ist die Primärwicklung W1 eines Transformators T1 (in Fig. 1 nicht eingezeichnet) geschaltet. Des Weiteren ist die erste Diode D2 anodenseitig mit der Masse verbunden, und kathodenseitig mit einer dem ersten Halbleiterschalter V1 zugewandten, ersten Anschlussklemme 1 an der Primärwicklung W1 des Transformators T1. Die zweite Diode D3 ist kathodenseitig mit dem Potential der Versorgungsspannung am Drain-Anschluss des ersten Halbleiterschalters V1 verbunden, und anodensseitig mit einer dem zweiten Halbleiterschalter V2 zugewandten, zweiten Anschlussklemme 2 an der Primärwicklung W1 des Transformators T1.

Die Halbleiterschalter V1 und V2 werden jeweils gleichzeitig eingeschaltet. In der Leitendphase der Halbleiterschalter V1 und V2 fließt der Strom über Halbleiterschalter V1, die Primärwicklung W1 und Halbleiterschalter V2 zur Masse. Beide Halbleiterschalter V1 und V2 werden gleichzeitig wieder abgeschaltet. In der Sperrphase der Halbleiterschalter V1 und V2 treibt die Induktivität im stromdurchflossenen Stromkreis den Strom weiter, und führt zu einem Spannungsanstieg an den Halbleiterschalter V1 und V2, bis jeweils die Spannung am Zwischenkreis plus einer Diodenschwelle erreicht wird. Auf diese Weise wird die maximale Spannungsbelastung an den Halbleiterschalter V1 und V2 begrenzt. In der Sperrphase der Halbleiterschalter V1 und V2 muss aber die zulässige Spannungsfestigkeit der Halbleiterschalter V1 und V2 jedenfalls größer sein als die Höhe der Zwischenkreisspannung.

In Fig. 2 ist im Vergleich hierzu eine eine mögliche Ausführungsform der Erfindung dargestellt, die eine reduzierte Belastung der Halbleiterschalter V1 und V2 sicher stellt. Sie zeigt eine asymmetrische Halbbrücke mit zwei seriell geschalteten Halbleiterschaltern V1 und V2, wobei der Drain-Anschluss des ersten Halbleiterschalters V1 mit einem ersten Anschluss einer Versorgungsspannung Vᵢₙ verbunden ist, und der Source-Anschluss des zweiten Halbleiterschalters V2 mit dem zweiten Anschluss der Versorgungsspannung Vᵢₙ, bzw. mit Masse. Zwischen dem Source-Anschluss des ersten Halbleiterschalters V1 und dem Drain-Anschluss des zweiten Halbleiterschalters V2 ist wiederum die Primärwicklung W1 eines Transformators T1 geschaltet, dessen Sekundärwicklung W2 mit einer sekundärsei tigen Last L1 verbunden ist. Auf der Sekundärseite kann auch eine Gleichrichter- und Glättungsstufe vorgesehen sein, etwa mithilfe einer Diode D1 und einem Kondensator C1.

Des Weiteren ist eine erste Diode D2 vorgesehen, die anodenseitig mit dem Potential der Versorgungsspannung am Source-Anschluss des zweiten Halbleiterschalters V2 verbunden ist, und kathodenseitig mit einer dem ersten Halbleiterschalter V1 zugewandten, ersten Anschlussklemme 1 an der Primärwicklung W1 des Transformators T1. Eine zweite Diode D3 ist kathodenseitig mit dem Potential der Versorgungsspannung am Drain-Anschluss des ersten Halbleiterschalters V1 verbunden, und anodenseitig mit einer dem zweiten Halbleiterschalter V2 zugewandten, zweiten Anschlussklemme 2 an der Primärwicklung W1 des Transformators T1.

Erfindungsgemäß ist nun eine erste Hilfswicklung W3 des Transformators T1 vorgesehen, die seriell zwischen der ersten Diode D2 und der ersten Anschlussklemme 1 an der Primärwicklung W1 des Transformators T1 geschaltet ist. Des Weiteren ist eine zweite Hilfswicklung W4 des Transformators T1 vorgesehen, die seriell zwischen der zweiten Diode D3 und der zweiten Anschlussklemme 2 an der Primärwicklung W1 des Transformators T1 geschaltet ist.

Die Halbleiterschalter V1 und V2 schalten wiederum (nahezu) gleichzeitig. Während der Einschaltphase der Halbleiterschalter V1 und V2 verhält sich der Stromverlauf durch den Stromkreis bestehnd aus Halbleiterschalter V1, Primärwicklung W1 und Halbleiterschalter V2 wie beim bekannten Stand der Technik. Der Strom steigt entsprechend der vorhandenen treibenden Spannung und der Impedanz des Transformators T1 an. Im Moment des Ausschalten der Halbleiterschalter V1 und V2 treibt die Induktivität im genannten Stromkreis, die nicht mit der Sekundärwicklung W2 von Transformator T1 verkoppelt ist, den Strom weiter, und führt zu einem schnellen Spannungsanstieg an der Primärwicklung W1. Die Hilfswicklungen W3 und W4 von Transformator T1 sind gut verkoppelt mit der Primärwicklung W1 gewickelt. Demzufolge steigt auch die Spannung an der Hilfswicklung W3 und der Hilfswicklung W4, im Verhältnis der jeweiligen Übersetzungszahlen, an.

Sobald nun die Summe der Spannungen an der Hilfswicklung W1, der Hilfswicklung W2 und der Hilfswicklung W3 vermindert um die beiden Diodenschwellen der Dioden D2 und D3 die Höhe der Zwischenkreisspannung erreicht, werden die Dioden D2 und D3 leitend. Dadurch wird der weitere Spannungsanstieg begrenzt. In diesem Moment entspricht die Höhe der Belastung des Halbleiterschalters V1 der Summe der Zwischenkreisspannung und der Diodenschwelle der Diode D2, abzüglich der momentanen Spannung an der Hilfswicklung W3.

Durch die Serienschaltung von je einer Hilfswicklung W3 und W4 an den Dioden D2 und D3, kann die maximale Spannungsbelastung an den Halbleiterschaltern V1 und V2 reduziert werden. Dadurch können Bauelemente mit geringerer Spannungsfestigkeit eingesetzt werden. Bauteile solcher Art sind naturgemäß billiger, oder haben andere relevante Vorteile, wie geringere Leitwiderstände oder kleinere Bauformen.

## Patentansprüche

1. Schaltungsanordnung zur Entlastung von Halbleiterschaltern (V1, V2) in Übertragerschaltungen mit einer Primärseite und einer Sekundärseite, die auf der Primärseite einen ersten Halbleiterschalter (V1) und einen seriell geschalteten, zweiten Halbleiterschalter (V2) aufweisen, wobei der Drain-Anschluss des ersten Halbleiterschalters (V1) mit einem ersten Anschluss einer Versorgungsspannung (Vᵢₙ) verbunden ist, und der Source-Anschluss des zweiten Halbleiterschalters (V2) mit einem zweiten Anschluss der Versorgungsspannung (Vᵢₙ) verbunden ist, und zwischen dem Source-Anschluss des ersten Halbleiterschalters (V1) und dem Drain-Anschluss des zweiten Halbleiterschalters (V2) die Primärwicklung (W1) eines Transformators (T1) geschaltet ist, dessen Sekundärwicklung (W2) mit einer sekundärseitigen Last (L1) verbunden ist, und eine erste Diode (D2) vorgesehen ist, die anodenseitig mit dem Potential der Versorgungsspannung (Vᵢₙ) am Source-Anschluss des zweiten Halbleiterschalters (V2) verbunden ist, und kathodenseitig mit einer dem ersten Halbleiterschalter (V1) zugewandten, ersten Anschlussklemme (1) an der Primärwicklung (W1) des Transformators (T1) verbunden ist, sowie eine zweite Diode (D3) vorgesehen ist, die kathodenseitig mit dem Potential der Versorgungspannung (Vᵢₙ) am Drain-Anschluss des ersten Halbleiterschalters (V1) verbunden ist, und anodenseitig mit einer dem zweiten Halbleiterschalter (V2) zugewandten, zweiten Anschlussklemme (2) an der Primärwicklung (W1) des Transformators (T1) verbunden ist, **dadurch ge-kennzeichnet**, dass eine erste Hilfswicklung (W3) des Transformators (T1) mit gegenüber der Primärwicklung (W1) entgegengesetztem Wicklungssinn vorgesehen ist, die seriell zwischen der ersten Diode (D2) und der ersten Anschlussklemme (1) an der Primärwicklung (W1) des Transformators (T1) geschaltet ist, und eine zweite Hilfswicklung (W4) des Transformators (T1) mit gegenüber der Primärwicklung (W1) entgegengesetztem Wicklungssinn vorgesehen ist, die seriell zwischen der zweiten Diode (D3) und der zweiten Anschlussklemme (2) an der Primärwicklung (W1) des Transformators (T1) geschaltet ist.

2. Schaltnetzteil mit einer Schaltungsanordnung nach Anspruch 1.

## Claims

1. Circuit arrangement for reducing the load of semiconductor switches (V1, V2) in transformer circuits with a primary side and a secondary side, which on the primary side features a first semiconductor switch (V1) and a serially connected second semiconductor switch (V2), with the drain terminal of the first semiconductor switch (V1) being connected to a first terminal of a supply voltage (Vᵢₙ) and the source terminal of the second semiconductor switch (V2) being connected to a second terminal of the supply voltage (Vᵢₙ), and connected between the source terminal of the first semiconductor switch (V1) and the drain terminal of the second semiconductor switch (V2) is the primary winding (W1) of a transformer (T1) of which the secondary winding (W2) is connected to a secondary-side load (L1) and a first diode (D2) is provided which is connected on the anode side to the potential of the supply voltage (Vᵢₙ) at the source terminal of the second semiconductor switch (V2) and is connected on the cathode side to a first connection terminal (1) facing towards the first semiconductor switch (V1) on the primary winding (W1) of the transformer (T1), as well as a second diode (D3) being provided which is connected on the cathode side to the potential of the supply voltage (Vᵢₙ) at the drain terminal of the first semiconductor switch (V1) and is connected on the anode side to a second connection terminal (2) facing towards the second semiconductor switch (V2) on the primary winding (W1) of the transformer (T1), **characterised in that** a first secondary winding (W3) of the transformer (T1) is provided with a winding which is in the opposite direction compared to that of the primary winding (W1), which is connected serially between the first diode (D2) and the first connection terminal (1) on the primary winding (W1) of the transformer (T1), and a second secondary winding (W4) of the transformer (T1) with a winding which is in the opposite direction compared to that of the primary winding (W1) is provided which is connected serially between the second diode (D3) and the second connection terminal (2) on the primary winding (W1) of the transformer (T1).

2. Switched-mode power supply with a circuit arrangement according to claim 1.

## Revendications

1. Circuit destiné à décharger des commutateurs à semi-conducteur (V1, V2) dans des circuits transmetteurs avec un côté primaire et un côté secondaire qui présentent, du côté primaire, un premier commutateur à semi-conducteur (V1) et un deuxième commutateur à semi-conducteur (V2) monté en série, le drain du premier commutateur à semi-conducteur (V1) étant relié à un premier raccordement d'une tension d'alimentation (Vᵢₙ) et la source du deuxième commutateur à semi-conducteur (V2) étant reliée à un deuxième raccordement de la tension d'alimentation (Vᵢₙ) et entre la source du premier commutateur à semi-conducteur (V1) et le drain du deuxième commutateur à semi-conducteur (V2) étant monté l'enroulement primaire (W1) d'un transformateur (T1) dont l'enroulement secondaire (W2) est relié à une charge côté secondaire (L1), et une première diode (D2) étant prévue, laquelle est reliée, côté anode, au potentiel de la tension d'alimentation (Vᵢₙ) à la source du deuxième commutateur à semi-conducteur (V2) et, côté cathode, à une première borne de raccordement (1) tournée vers le premier commutateur à semi-conducteur (V1) sur l'enroulement primaire (W1) du transformateur (T1), ainsi qu'une deuxième diode (D3) qui est reliée, côté cathode, au potentiel de la tension d'alimentation (Vᵢₙ) au drain du premier commutateur à semi-conducteur (V1) et, côté anode, à une deuxième borne de raccordement (2) tournée vers le deuxième commutateur à semi-conducteur (V2) sur l'enroulement primaire (W1) du transformateur (T1), **caractérisé en ce que** sont prévus un premier enroulement auxiliaire (W3) du transformateur (T1) avec un sens d'enroulement opposé à l'enroulement primaire (W1), lequel enroulement auxiliaire est monté en série entre la première diode (D2) et la première borne de raccordement (1) sur l'enroulement primaire (W1) du transformateur (T1), et un deuxième enroulement auxiliaire (W4) du transformateur (T1) avec un sens d'enroulement opposé à l'enroulement primaire (W1), lequel enroulement auxiliaire est monté en série entre la deuxième diode (D3) et la deuxième borne de raccordement (2) sur l'enroulement primaire (W1) du transformateur (T1).

2. Bloc de commutation comportant un circuit selon la revendication 1.
